Europäisches Patentamt

European Patent Office

Office européen des brevets

(11) Publication number: **0 062 527**
**B1**

(12) **EUROPEAN PATENT SPECIFICATION**

(45) Date of publication of patent specification: **02.10.85**

(21) Application number: **82301789.2**

(22) Date of filing: **05.04.82**

(51) Int. Cl.⁴: **B 01 D 39/00,** B 01 J 20/32,
C 02 F 1/40, B 01 D 17/02

(54) **Granular filter medium for removing oil from oily water.**

(30) Priority: **07.04.81 US 251900**

(43) Date of publication of application:
**13.10.82 Bulletin 82/41**

(45) Publication of the grant of the patent:
**02.10.85 Bulletin 85/40**

(84) Designated Contracting States:
**BE DE FR IT LU NL SE**

(56) References cited:
**DE-A-2 426 306**
**FR-A-1 490 315**
**FR-A-1 494 464**
**FR-A-2 251 594**
**FR-A-2 462 183**
**GB-A-1 325 440**
**US-A-2 614 135**
**US-A-3 562 153**
**US-A-3 901 818**

(73) Proprietor: **Exxon Research and Engineering Company**
**P.O.Box 390 180 Park Avenue**
**Florham Park New Jersey 07932 (US)**

(72) Inventor: **Canevari, Gerard Paul**
**104 Central Avenue**
**Cranford New Jersey (US)**

(74) Representative: **Somers, Harold Arnold et al**
**ESSO Engineering (Europe) Ltd. Patents & Licences Apex Tower High Street**
**New Malden Surrey KT3 4DJ (GB)**

Courier Press, Leamington Spa, England.

**0 062 527**

## Description

This invention relates to a granular filter medium for removing oil from oily water, and more particularly (but not exclusively) pertains to granular media for use in filter beds for cleansing oily water, and still more particularly to granular media for clearing oil-in-water emulsions of their dispersed oil even after several backwashings.

Heretofore, filter beds for removing dispersed oils from oil-in-water emulsions utilised a sand or anthracite granular medium to trap the oil in the interstices of the medium.

Recent research, however, has shown that a more effective filtering mechanism would allow the oil to wet and adhere to the medium material in an adsorptive manner. Conventional sand or anthracite materials do not normally have adsorptive characteristics, and their ability to remove and retain oils is therefore limited.

After extensive screening of various sand and glass materials for filter bed use, a chemical treatment was developed to enhance the affinity of sand for the oils dispersed in the water. The chemical treatment consisted of treating a 10 to 20 mesh (2.00 to 0.84 mm) sand with a primary aliphatic amine, as illustrated in U.S. Patent No. 3,901,818 issued August 26, 1975.

A filter bed of this treated sand was shown to have superior oil removal ability, but failed to retain this ability after an extended filtering run. After backwashing, this bed of aliphatic amine-treated sand did not regain its former ability to remove the entrained oils.

The present invention has developed new and improved chemically treated filter media for removing oil from oil-water emulsions, which media will regain its ability to remove the oils even after many backwashings.

The invention uses a chemical treatment which creates a siloxane bond between a lipophilic hydrocarbon and a granulated sand or glass substrate. This chemical treatment binds the lipophilic hydrocarbon to the surface of the medium where it is exposed to the flowing oil-water stream.

A similar chemical treatment is shown and described in U.S. Patent No. 4,017,528, issued: April 12, 1977. The above patent teaches the creation of a siloxane-type bond in porous silicon dioxide substrates to improve their absorptive properties for chromatography purposes.

The present invention desires to improve the adsorptive properties of a silicon dioxide granulated substrate, but requires that the substrate be one which is substantially non-porous, instead of being porous.

The present invention provides a back-washable filter medium for removing oil from oil-in-water emulsions comprising substantially smooth-surfaced, substantially non-porous granular glass, or uncrushed filter sand, of which at least some has been treated with a caustic solution to impart active hydroxyl groups thereto and thereafter treated with a trialkoxysilane.

The medium may comprise treated uncrushed filter sand made by treatment first with caustic solution and thereafter with from 3 to 3.5 grams of trialkoxysilane per litre of caustic treated uncrushed filter sand. The filter medium may comprise a mixture of said treated uncrushed filter sand and untreated uncrushed filter sand, e.g. comprising approximately 50 vol % of treated uncrushed filter sand and approximately 50 vol. % of untreated uncrushed filter sand.

In another sense, the indiscriminate treatment with trialkoxysilane when applied to granular substrates for purposes of this invention may not always provide a workable filter medium because the resulting adsorptivity of the filter bed might, in some cases, cause the granular particles to agglomerate. This results in a plugging or general fouling of the bed such that it will not filter properly.

In the case where the filter medium comprises substantially smooth-surfaced substantially non-porous granular glass, the risk of plugging or general fouling of the bed is reduced or substantially eliminated when the filter medium comprises treated granular glass made by treatment first with caustic solution and thereafter with trialkoxysilane so that the average or mean level of trialkoxysilane treatment in the filter medium corresponds to amounts in the range of from 1.5 to 1.8 grams trialkoxysilane per litre of filter medium. The filter medium may comprise a mixture of treated granular glass and untreated granular glass. The filter medium may comprise approximately 50 vol. % of treated glass which has been treated with from 3 to 3.5 grams trialkoxysilane per litre of glass and 50 vol. % of untreated glass.

It has been found that treated granular glass can be mixed in substantially equal proportions with non-treated glass materials in order to provide substantially uniform flow paths through the cross-section of the filter medium when contained in a filter bed.

It is also contemplated that glass granules may be only partially treated with alkoxysilane in order to provide a free flowing filter bed during backwashing.

When a mixture of treated and untreated granular material is employed to form the filter medium, the mixture is preferably substantially uniform.

Uncrushed filter sand may be fully treated (i.e. with 3 to 3.5 grams trialkoxysilane per litre of sand) because it has a less adsorptive character than glass granules and a full chemical treatment of the uncrushed filter sand does not result in an excessively oil-wettable filter bed, generally speaking.

The granular glass or uncrushed filter sand preferably has mesh sizes in the range of from 10 to 30 (U.S. standard sieve size, which is used in the description of the present invention) (i.e.: 2.00 to 0.59 mm).

The or each alkoxy group of the trialkoxysilane preferably has from 1 to 3 carbon atoms.

2

The trialkoxysilane may be selected from at least one of: methyl- or vinyl- or gamma-aminopropyl-triethoxysilane or methyl- or N-beta-aminoethyl, gamma-aminopropyl- trimethoxysilane.

The aforementioned procedures will provide filter media which not only have superior oil-wetting properties, but which also effectively regain their oil-wettability even after many backwashes.

A first embodiment of the invention comprises a mixture of approximately 50 per cent by volume of smooth-surfaced, non-porous granular glass treated with approximately 3 to 3.5 grams/litre granular glass of at least one trialkoxysilane wherein said alkoxy moiety comprises from 1 to 3 e.g. 1 or 2 carbons; and approximately 50 per cent by volume of non-treated smooth-surfaced, nonporous granular glass.

A second embodiment comprises smooth-surfaced, non-porous, granular filter sand treated with approximately 3 to 3.5 grams/litre filter sand of at least one trialkoxysilane wherein the alkoxy moiety has from 1 to 3, e.g. 1 or 2 carbons.

A third embodiment comprises smooth-surfaced, non-porous, granular glass treated with approximately 1.5 to 1.8 grams/litre granular glass of at least one trialkoxysilane, wherein said alkoxy moiety comprises from 1 to 3, e.g. 1 or 2 carbons.

The above granular substrate may have a mesh size (U.S. standard sieve) of either approximately from 10 to 20 or from 20 to 30 (i.e.: from 2.00 to 0.84 mm or from 0.84 to 0.59 mm).

The trialkoxysilane may preferably comprise a gamma-aminopropyltriethoxysilane.

The trialkoxysilane can also be selected from methyl-, vinyl-, gamma-aminopropyltriethoxysilane; methyl- and N-beta-aminoethyl-gammaaminopropyl-trimethoxysilane.

It is an object of this invention to provide improved filter media for cleansing an oil-in-water emulsion of dispersed oil.

It is another object of the invention to provide filter media which maintain their lipophilic character even after many backwashings.

The invention is now further described with reference to some illustrative embodiments thereof, and for comparison, with reference to filter media which are not in accordance with the invention, and with reference to the accompanying diagrammatic drawings, in which:—

Figure 1 is a schematic diagram of a congealed filter bed of fully treated glass granules;

Figure 2 is a schematic diagram of a partially treated filter bed of glass granules;

Figure 3 is a schematic diagram of a filter bed containing a mixture of fully treated and untreated glass granules;

Figure 4 is a graph of oil removal performance with respect to time (in minutes) of a filter bed containing fully treated filter sand; and

Figure 5 is a graph of oil removal performance with respect to time (in minutes) of a filter bed of fully treated glass granules.

Detailed description of the invention

Generally speaking, the invention relates to filter media for cleansing oil-in-water emulsions of their dispersed oil. The filter media of this invention are chemically treated non-porous granular glass or "uncrushed filter sand". The granular material is first given a caustic wash with a solution of 10 percent by weight NaOH, in order to impart active hydroxyl groups. These hydroxyl groups allow the material to easily form a siloxane bond with a trialkoxysilane. The trialkoxysilane chemically bonds with the glass or sand material leaving a hydrocarbon group exposed on the surface of the granules, thus imparting adsorptive oil-wettability.

The pretreat caustic wash is preferably conducted at higher than ambient temperatures for several hours. More than one wash may be found to be necessary to obtain a properly activated surface for siloxane bonding.

After treating the granular material with caustic, the material is washed and dried.

Approximately 3 to 3.5 grams/liter of trialkoxysilane is added to the causticly treated granules, and the granules are placed in a 75° to 90°C oven until dry. The temperature of the oven is then raised to 150°C for 3 hours. The granules are then allowed to cool to ambient temperature.

When glass granules are treated with the trialkoxysilane, as described above, the resulting filter medium is observed to have poor backwashing characteristics.

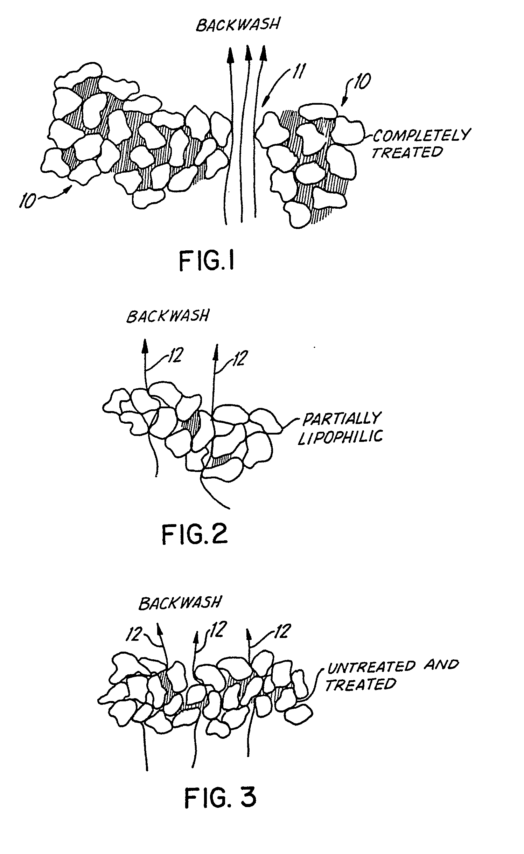

This backwashing problem, and its solution, will be explained hereinafter, with reference to Figures 1—3.

The glass granules may be recycled glass of approximately 10 to 20 mesh (2.00 to 0.84 mm). Generally speaking, the glass granules are preferred to have a smooth surface, i.e. the granules should not be jagged or contain fissures. Smooth glass granules are preferred to prevent congealing of the granules in the filter bed.

Because oil removal is generally accomplished by adsorption of the oil upon the surfaces of the granules, the glass should be of a nonporous variety.

Sand of 10 to 20 and 20 to 30 mesh size (i.e.: 2.00 to 0.84 mm and 0.84 to 0.59 mm) was also treated with the trialkoxysilane to provide a good filter medium. It was discovered, however, that not all types of sand provide a workable filter medium. Two types of sand were investigated: "uncrushed filter sand" and "quartz sand".

"Quartz sand" is apparently a "loose" term. Such sand is used in casting among other specialty uses,

**0 062 527**

and is sometimes higher in $Al_2O_3$. However, the "quartz sand" purchased from Rudd, Paterson, N.J. (sold as #18 Quartz) was actually whiter than the "uncrushed filter sand" indicating it was higher in $SiO_2$. Rudd cited that it was 99.9% $SiO_2$ which is consistent with its appearance.

However, the major difference is probably the fact that it is mechanically crushed to obtain the desired mesh size. This increases the surface area, creates fissures and is therefore physically different than "uncrushed filter sand". "Quartz sand" has poor backwashing characteristics. The poor backwashing of "quartz sand" could be due to the increased cohesiveness of the sand particles after they are oil wetted due to possible locking together of the "spines and fissures" of the sand particle surface.

"Uncrushed filter sand" of 10 to 20 mesh and 20 to 30 mesh (i.e.: 2.00 to 0.84 mm and 0.84 to 0.59 mm) was purchased from Jessie Morie Co., Mauricetown, N.J. The analysis of this sand by wt.% is as follows:

| | |
|---|---|
| $SiO_2$ | 99.39 |
| $Fe_2O_3$ | .24 |
| $Al_2O_3$ | .19 |
| $TiO_2$ | .12 |
| CaO | .01 |
| MgO | .004 |
| Loss on ignition | .046 |

(heat 1740°F [=949°C] for 2 hours to measure organic content). This sand is not crushed or mechanically worked in any way.

The "uncrushed filter sand" or glass granules are preferably treated with a gamma-aminopropyl triethoxysilane, which can be purchased from Union Carbide, and which is sold with the designation A-1100.

Other trialkoxysilanes can also be used to treat the granular materials, and have been found to provide the "uncrushed filter sand" in particular, with good oil retention capability even after backwashing, as shown below in Table I.

TABLE I

Comparison of silane coupling agents oil retention
on treated filter sand after simulated oil
water clarification and backwashing

| Union carbide number | Nomenclature | Oil retention ppm oil/gram sand | |
|---|---|---|---|
| | | 10/20 Mesh (2.00/0.84 mm) | 20/30 Mesh (0.84/0.59 mm) |
| A-162 | Methyl triethoxy silane | 1330 | 3280 |
| A-163 | Methyl trimethoxy silane | 1370 | 2180 |
| A-151 | Vinyl triethoxy silane | 870 | 1600 |
| A-1120 | N-Beta-aminoethyl gamma-aminopropyl trimethoxy silane | 1750 | 2240 |
| A-1100 | Gamma-aminopropyl triethoxy silane | 2770 | 2740 |
| Control | No chemical | 68 | 57 |

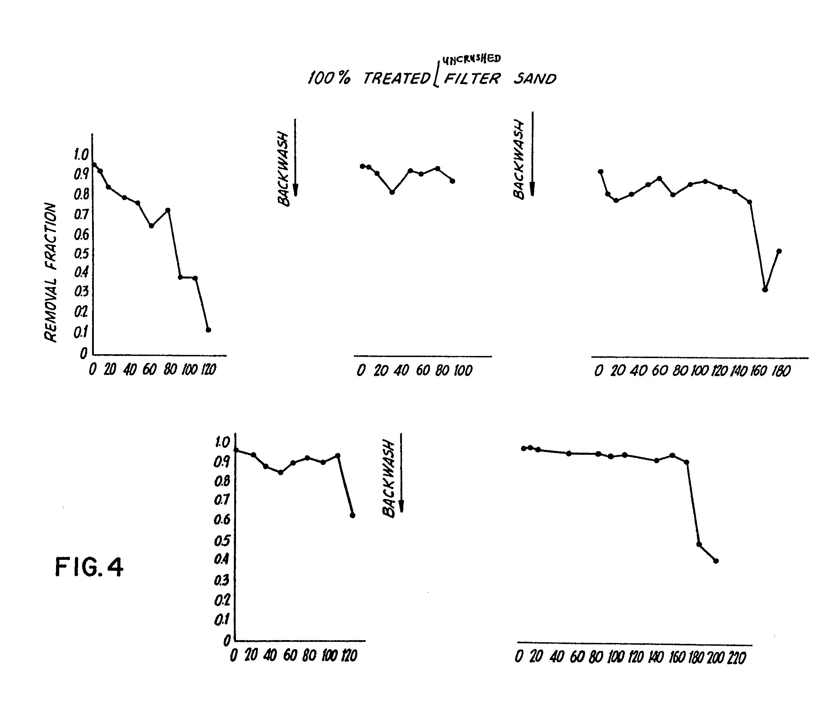

Uncrushed filter sand of 10 to 20 mesh (2.00 to 0.84 mm) size, treated with approximately 3 to 3.5 grams/liter of gamma-aminopropyl triethoxysilane gave consistently good oil removal performance. This was so, even after repeated backwashings of the filter bed, as shown in Figure 4. Very good long term performance was noted even after four backwashes.

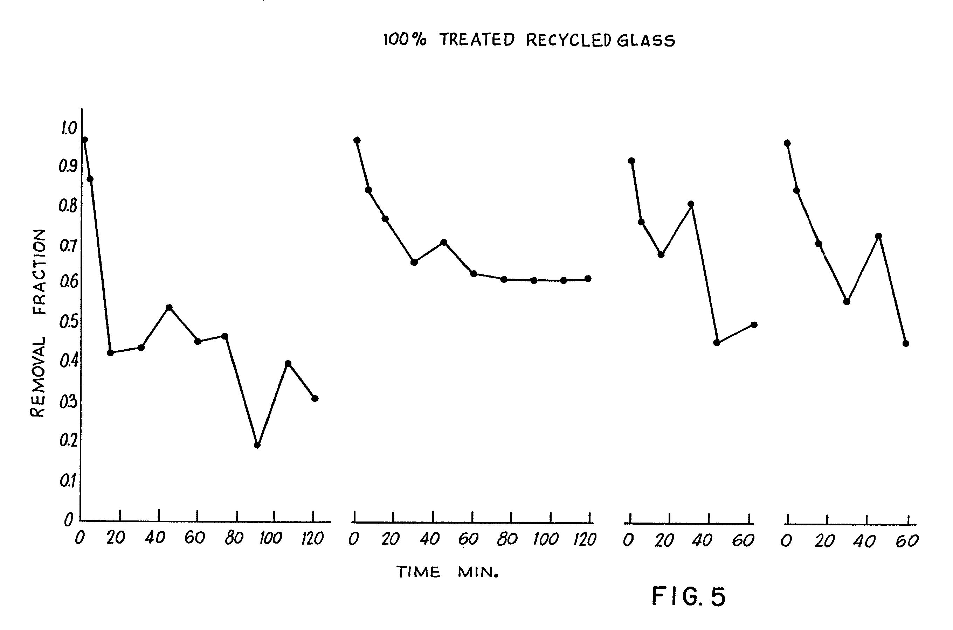

When recycled glass granules were similarly treated, however, the filter medium tended to congeal, i.e. the granules tended to clump together, as illustrated in the filter bed of Figure 1. The congealed granules 10 are believed to result from the fact that the glass when treated with the aforementioned silane, becomes

4

**0 062 527**

overly effective. That is to say, the glass granules become so oil-wettable that they tend to stick together. Such congealed granules provide a poor filter bed, because channels 11 are formed in the filter bed, thus deteriorating the ability of the filter bed to be cleansed. The effect of cleansing such a bed via backwashing, is shown in Figure 5.

In order to resolve this problem, the glass granules were either treated with only 50% by weight of the silane (1.5 to 1.8 grams/liter), or the 100% treated glass granules were mixed with 50% by volume of untreated glass granules, as depicted in the filter beds of Figures 2 and 3, respectively. The aforementioned treated glass granules allow the backwash to flow through the interstices of the beds, as shown by arrows 12. In this way, the beds can be effectively cleansed of their entrained oil, and are thus reusable.

The mixed media bed of Figure 3 consisting of a portion of treated granular media and a portion of untreated media prevents congealing of the bed since the oil wettable particles would be separated from one another by untreated particles.

The less lipophilic treated bed of Figure 2 has some sites on the particles that are not oil wettable, and hence the congealing effect is reduced.

A summary of the performance of the "uncrushed filter sand" and glass filter beds of this invention are outlined below in Table II.

TABLE II
Summary of granular media tests

| System | Consecutive runs | Comments |
|---|---|---|
| 1. 100% Treated* recycle glass (mesh size range 10/20) (2.00—0.84 mm) | 4 | Poor backwash: Poor performance |
| 2. 100% Treated white (quartz) sand (10/20 mesh) (2.00—0.84 mm) | 3 | Fair-poor performance |
| 3. 100% Treated uncrushed filter sand (10/20 mesh) (2.00—0.84 mm) | 6 | Good backwashing: Very good performance |
| 4. 25% Treated** uncrushed filter sand (10/20 mesh) (2.00—0.84 mm) | 3 | Fair performance: Fairly rapid breakthrough |
| 5. Mixture of 50 vol% of 100% treated uncrushed filter sand+50 vol% untreated uncrushed filter sand | 6 | Equivalent to 100% treat filter sand |
| 6. Untreated uncrushed filter sand | | Decreasing effectiveness: Possible additional runs |
| 7. Mixture of 50 vol% of 100% treated Recycle glass+50 vol% Untreated recycle glass | 3 | Fair performance |
| 8. 25% Treated** recycled glass | 3 | Good performance: Better than 100% treat glass |

\* "100% treated" means treated with 3 to 3.5 grams trialkoxysilane per litre of granular filter medium.
\*\* "25% treated" means treated with 25% of 3 to 3.5 grams trialkoxysilane/litre of granular filter medium.

**Claims**

1. A back-washable filter medium for removing oil from oil-in-water emulsions comprising substantially smooth-surfaced, substantially non-porous granular glass, or uncrushed filter sand, of which at least some has been treated with a caustic solution to impart active hydroxyl groups thereto and thereafter treated with a trialkoxysilane.

2. The filter medium of claim 1 comprising treated uncrushed filter sand made by treatment first with caustic solution and thereafter with from 3 to 3.5 grams of trialkoxysilane per litre of caustic treated filter sand.

3. The filter medium of claim 2 comprising a mixture of said treated uncrushed filter sand and untreated uncrushed filter sand.

4. The filter medium of claim 3 comprising approximately 50 vol % of treated uncrushed filter sand and approximately 50 vol % of untreated uncrushed filter sand.

5

**0 062 527**

5. The filter medium of claim 1 comprising treated granular glass made by treatment first with caustic solution and thereafter with trialkoxysilane so that the average or mean level of trialkoxysilane treatment in the filter medium corresponds to amounts in the range of from 1.5 to 1.8 grams trialkoxysilane per litre of filter medium.

6. The filter medium of claim 5 comprising a mixture of treated granular glass and untreated granular glass.

7. The filter medium of claim 6 comprising approximately 50 vol % treated granular glass which has been treated with from 3 to 3.5 grams trialkoxysilane per litre of granular glass and 50 vol % of untreated granular glass.

8. The filter medium of any one of claims 1 to 7 in which the granular glass or uncrushed filter sand has mesh sizes in the range of from 10 to 30 (2.00 to 0.59 mm).

9. The filter medium of any one of claims 1 to 8 in which the or each alkoxy group of the trialkoxysilane has from 1 to 3 carbon atoms.

10. The filter medium of any one of claims 1 to 9 in which the trialkoxysilane is selected from at least one of: methyl- or vinyl- or gamma-aminopropyl-triethoxysilane or methyl- or N-beta-aminoethyl, gamma-aminopropyl-trimethoxysilane.

11. The use of the filter medium of any one of claims 1 to 10 in removing oil from water.

**Revendications**

1. Milieu filtrant susceptible de ré-extraction pour enlever l'huile d'émulsions du type huile-dans-eau, comprenant du verre granulaire principalement non poreux, à surface pratiquement lisse ou du sable filtrant non broyé, dont une partie au moins a été traitée avec une solution caustique pour y adjoindre des groupes hydroxyle actifs, puis traitée avec un trialkoxysilane.

2. Milieu filtrant suivant la revendication 1, comprenant du sable filtrant traité non broyé obtenu par traitement d'abord avec une solution caustique puis avec 3 à 3,5 g de trialkoxysilane par litre de sable filtrant traité avec la solution caustique.

3. Milieu filtrant suivant la revendication 2, comprenant un mélange dudit sable filtrant traité non broyé et de sable filtrant non traité non broyé.

4. Milieu filtrant suivant la revendication 3, comprenant environ 50% en volume de sable filtrant traité non broyé et environ 50% en volume de sable filtrant non traité non broyé.

5. Milieu filtrant suivant la revendication 1, comprenant du verre granulaire traité obtenu par traitement d'abord avec une solution caustique, puis avec un trialkoxysilane de manière que le taux moyen de traitement au trialkoxysilane dans le milieu filtrant corresponde à des quantités comprises dans l'intervalle de 1,5 à 1,8 g de trialkoxysilane par litre de milieu filtrant.

6. Milieu filtrant suivant la revendication 5, comprenant un mélange de verre granulaire traité et de verre granulaire non traité.

7. Milieu filtrant suivant la revendication 6, comprenant environ 50% en volume de verre granulaire traité, dont le traitement a été effectué avec 3 à 3,5 g de trialkoxysilane par litre de verre granulaire et 50% en volume de verre granulaire non traité.

8. Milieu filtrant suivant l'une quelconque des revendications 1 à 7, dans lequel le verre granulaire ou le sable filtrant non broyé a des diamètres compris dans l'intervalle de 10 à 30 mailles (2,00 à 0,59 mm).

9. Milieu filtrant suivant l'une quelconque des revendications 1 à 8, dans lequel le ou chaque groupe alkoxy du trialkoxysilane a 1 à 3 atomes de carbone.

10. Milieu filtrant suivant l'une quelconque des revendications 1 à 9, dans lequel le trialkoxysilane est au moins un représentant du groupe comprenant le méthyl- ou vinyl- ou gamma-aminopropyl-triéthoxy-silane ou le méthyl- ou N-bêta-aminoéthyl, gamma-aminopropyltriméthoxysilane.

11. Utilisation du milieu filtrant suivant l'une quelconque des revendications 1 à 10 pour séparer l'huile de l'eau.

**Patentansprüche**

1. Rückwaschbares Filtermaterial zur Entfernung von Öl aus Öl-in-Wasser-Emulsionen, gekennzeichnet durch im wesentlichen glattoberflächiges, im wesentlichen nicht poröses granulares Glas oder nicht zerkleinerten Filtriersand, wovon mindestens ein Teil mit einer Ätzlösung zur Ausbildung aktiver Hydroxylgruppen und anschließend mit einem Trialkoxysilan behandelt worden ist.

2. Filtermaterial nach Anspruch 1 gekennzeichnet durch nicht zerkleinerten Filtriersand, der zuerst mit einer Ätzlösung und anschließend mit 3 bis 3,5 g Trialkoxysilan je Liter des mit Ätzlösung behandelten Filtriersandes behandelt worden ist.

3. Filtermaterial nach Anspruch 2, gekennzeichnet durch eine Mischung des behandelten, nicht zerkleinerten Filtriersandes und nicht behandeltem, nicht zerkleinerten Filtriersand.

4. Filtermaterial nach Anspruch 3 gekennzeichnet durch ungefähr 50 Vol.% behandelten, nicht zerkleinerten Filtriersand und ungefähr 50 Vol.% unbehandelten, nicht zerkleinerten Filtriersand.

5. Filtermaterial nach Anspruch 1, gekennzeichnet durch behandeltes granulares Glas, das zuerst mit Ätzlösung und anschließend mit Trialkoxysilan behandelt worden ist, so daß die durchschnittliche oder

6

# 0 062 527

mittlere Konzentration der Trialkoxysilanbehandlung in dem Filtermaterial Mengen im Bereich von 1,5 bis 1,8 g Trialkoxysilan je Liter Filtermaterial entspricht.

6. Filtermaterial nach Anspruch 5, gekennzeichnet durch eine Mischung von behandeltem granularen Glas und nicht behandeltem granularen Glas.

7. Filtermaterial nach Anspruch 6, gekennzeichnet durch ungefähr 50 Vol.% behandeltes granulares Glas, das mit 3 bis 3,5 g Trialkoxysilan je Liter granularem Glas behandelt worden ist, und 50 Vol.% nicht behandeltes granulares Glas.

8. Filtermaterial nach einem der Ansprüche 1 bis 7, dadurch gekennzeichnet, daß das granulare Glas oder der nicht zerkleinerte Filtriersand Korngrößen entsprechend einer lichten Maschenweite im Bereich von 2,00 bis 0,59 mm besitzen.

9. Filtermaterial nach einem der Ansprüche 1 bis 8, dadurch gekennzeichnet, daß die oder jede Alkoxygruppe des Trialkoxysilans 1 bis 3 Kohlenstoffatome besitzt.

10. Filtermaterial nach einem der Ansprüche 1 bis 9, dadurch gekennzeichnet, daß das Trialkoxysilan ausgewählt ist aus mindestens einer der folgenden Verbindungen: Methyl- oder Vinyl- oder γ-Aminopropyl-triethoxysilan oder Methyl- oder N-β-Aminoethyl oder γ-Aminopropyl-trimethoxysilan.

11. Verwendung des Filtermaterials nach einem der Ansprüche 1 bis 10 zum Entfernen von Öl aus Wasser.

BACKWASH

COMPLETELY TREATED

FIG.1

BACKWASH

PARTIALLY LIPOPHILIC

FIG.2

BACKWASH

UNTREATED AND TREATED

FIG. 3

100% TREATED [UNCRUSHED FILTER SAND

BACKWASH

REMOVAL FRACTION

1.0
0.9
0.8
0.7
0.6
0.5
0.4
0.3
0.2
0.1
0

0 20 40 60 80 100 120

0 20 40 60 80 100

0 20 40 60 80 100 120 140 160 180

BACKWASH

FIG. 4

1.0
0.9
0.8
0.7
0.6
0.5
0.4
0.3
0.2
0.1
0

0 20 40 60 80 100 120

BACKWASH

0 20 40 60 80 100 120 140 160 180 200 220

100% TREATED RECYCLED GLASS

FIG. 5

0 062 527